# EUROPÄISCHE PATENTSCHRIFT

(11) **EP 3 826 731 B1**
(45) Veröffentlichungstag und Bekanntmachung des Hinweises auf die Patenterteilung: **24.12.2025**
(21) Anmeldenummer: 19752123.0
(22) Anmeldetag: 25.07.2019
(51) Int. Cl.: A62C 35/68

(54) **LÖSCHDÜSE, FEUERLÖSCHEINRICHTUNG UND BRANDSCHUTZSYSTEM MIT ENERGY HARVESTING**
EXTINGUISHING NOZZLE, FIRE EXTINGUISHING INSTALLATION AND FIRE PROTECTION SYSTEM WITH ENERGY HARVESTING
BUSE D'EXTINCTION, DISPOSITIF D'EXTINCTION D'INCENDIE ET SYSTÈME DE PROTECTION CONTRE LE FEU AVEC COLLECTE D'ÉNERGIE

(30) Priorität: 26.07.2018 DE 102018118112
(43) Veröffentlichungstag der Anmeldung: 02.06.2021
(73) Patentinhaber: Minimax GmbH, 23843 Bad Oldesloe (DE)
(72) Erfinder: BÖKE, Joachim, 23840 Bad Oldesloe (DE); LICKEFETT, André, 23840 Bad Oldesloe (DE)
(74) Vertreter: Eisenführ Speiser
(86) Internationale Anmeldenummer: PCT/EP2019/070102
(87) Internationale Veröffentlichungsnummer: WO 2020/021036

(56) Entgegenhaltungen:
- WO-A1-2007/132973
- DE-U1- 202017 105 705
- GB-A- 2 549 980
- US-B1- 9 573 008

## Beschreibung

Die folgende Erfindung betrifft eine Löschdüse einer Feuerlöscheinrichtung zur selektiven Erkennung und Bekämpfung von Bränden in mindestens einem Schutzbereich. Die Erfindung betrifft darüber hinaus eine Feuerlöscheinrichtung, die die erfindungsgemäße Löschdüse einsetzt, sowie ein Feuerlöschsystem. Die Erfindung betrifft ebenfalls ein Verfahren zum Betreiben einer Löschdüse und eine zugehörige Verwendung.

Die Verwendung von Löschdüsen in Brandschutzsystemen ist bekannt. Um eine Steuerung der Auslösung bzw. eine Kommunikation mit beispielsweise einer Brandmelder- und/oder Löschsteuerzentrale zu ermöglichen, müssen zu den im Regelfall in großer Zahl vorhandenen Löschdüsen eines bestimmten Schutzbereiches jeweils stromführende Anschlussleitungen verlegt werden. Diese Sprinkleranlagen mit derart steuerbaren Auslösungen sind beispielsweise aus der EP 2 286 879 bekannt. GB2549980A beschreibt ein Feuerlöschsystem, das mindestens eine oder mindestens zwei an der Wand montierte Sprühkopfeinheiten umfasst, die in der Lage sind, eine Feuerlöschflüssigkeit auf ein Feuer zu richten und zu spritzen.

Die Anbindung über stromführende Kabel hat allerdings mehrere Nachteile. Zum einen können bereits bei der Verlegung der Leitungen Fehler auftreten, die später die Ausfallsicherheit der Sprinkleranlage gefährden. Darüber hinaus ist der Aufwand hoch und demnach auch mit hohen Kosten verbunden. Einfache alternative Lösungen, wie beispielsweise Batterien, scheiden allerdings schon bereits aufgrund des damit verbundenen Wartungsaufwandes bzw. Umweltbelastungen aus.

Vor diesem Hintergrund war es eine Aufgabe der vorliegenden Erfindung, Löschdüsen, Brandschutzeinrichtungen und Brandschutzsysteme jeweils mit diesen Löschdüsen sowie zugehörige Verfahren anzugeben, die zumindest einen reduzierten Installations- und Wartungsaufwand bieten.

Gemäß einem ersten Aspekt wird die Aufgabe durch eine Löschdüse nach Anspruch 1 gelöst.

Dadurch, dass die Löschdüse gemäß diesem Aspekt einen Energieernter aufweist, ist es nicht notwendig, dass die Löschdüse beispielsweise über elektrische Anschlussleitungen mit Strom bzw. Energie versorgt wird. Vielmehr ist der Energieernter dazu eingerichtet, mittels Energy Harvesting geerntete Energie bereitzustellen. Damit kann die Kommunikationseinheit und das Steuerorgan ohne eine aufwendige Installation der Löschdüse kommunizieren bzw. die Löschdüse steuern.

Es ist somit ausreichend, lediglich die Fluidleitungen, mittels derer das Löschfluid in die Schutzbereiche der Feuerlöscheinrichtung geleitet wird, zu installieren, wobei die an die Löschleitungen angeschlossenen bzw. damit in Verbindung stehenden Löschdüsen einen reduzierten Installations- und Wartungsaufwand bieten. Derartige Löschdüsen können dann beispielsweise auch, ohne dass die Löschdüsen von einem elektrischen Stromversorgungsnetz abgetrennt werden müssen, zu Wartungszwecken einfach und unaufwendig ausgetauscht werden.

Die Feuerlöscheinrichtung ist zur selektiven Erkennung und Bekämpfung von Bränden und Brandquellen eingerichtet. Zu diesem Zweck kann entweder die Löschdüse selbst oder ein weiteres Element der Feuerlöscheinrichtung geeignete Sensormittel, die zum Detektieren von Bränden und Brandquellen eingerichtet sind, aufweisen. Entscheidend ist, dass die erfindungsgemäße Löschdüse bei erkanntem Brand bzw. bei erkannter Brandquelle mittels der Kommunikationseinheit ein entsprechendes Auslösesignal zum Freigeben bzw. Sperren des Durchlasses des Löschfluids erhalten kann.

Als Energy Harvesting wird allgemein die Gewinnung von elektrischer Energie aus sämtlichen denkbaren Umgebungsquellen, wie beispielsweise Umgebungstemperatur, Vibrationen oder Luftströmungen, verstanden. Im Rahmen der erfindungsgemäßen Löschdüse sind sämtliche zum Energy Harvesting geeignete Technologien vorstellbar, die eine von der Löschdüse benötige, hinreichende Energiemenge bereitstellen. Besonders vorteilhaft ist an der erfindungsgemäßen Lösung demnach, dass keine externen elektrischen Kabel oder Leitungen zur Energieversorgung der Löschdüse vorgesehen werden müssen.

Das Steuerorgan und andere Elemente der Löschdüse können innerhalb oder außerhalb eines Gehäuses der Löschdüse, d.h. eines Düsengehäuses, angeordnet sein, solange sie zusammen mit dem Düsengehäuse eine funktionale Einheit bilden, die die erfindungsgemäßen Funktionen erfüllt.

Die Kommunikationseinheit ist vorzugsweise zur bidirektionalen Kommunikation eingerichtet. Damit kann die Löschdüse beispielsweise auch Informationen, wie Informationen beüzliche eines durch die Löschdüse selbst detektierten Brandes, an die Steuereinheit der Feuerlöscheinrichtung übertragen. Zum Betrieb der Löschdüse, das heißt zum sicheren Auslösen der Löschdüse, ist jedoch lediglich eine Kommunikation von der Steuereinheit gerichtet auf die Kommunikationseinheit der Löschdüse erforderlich, das heißt, dass bei einem selektiv erkannten Brand die Auslösung der Löschdüse über die von der Steuereinheit ausgehende Kommunikation erfolgt. In diesem Fall ist auch eine unidirektionale Kommunikation ausreichend.

Gemäß der Erfindung ist der Energieernter dazu eingerichtet, Energie unter Ausnutzung des piezoelektrischen Effekts, des thermoelektrischen Effekts, des elektromagnetischen Effekts, des photoelektrischen Effekts und/oder von Strömungsenergie, insbesondere der Anströmung von Luft beispielsweise in Form von Windgeneratoren oder von Fluiden in Form von Turbinen, bereitzustellen. Erfindungsgemäß ist der Energieernter dazu eingerichtet, mehrere Effekte alternativ oder in Kombination auszunutzen.

Die Ausgestaltungen des Energy Harvestings bzw. des Energieernters können Makroeffekte oder auch, bevorzugt, Mikroeffekte ausnutzen.

Mikroeffekte sind beispielsweise auf dem piezoelektrischen Effekt beruhende Effekte, die bei Krafteinwirkung, beispielsweise durch Druck oder Vibration, elektrische Spannungen erzeugen. Hierbei können die Energieernter beispielsweise Schwingungsenergie, die in der Umgebung vorhanden ist, ähnlich dem Prinzip selbstaufziehender Uhren, in elektrische Energie umwandeln.

Auch bei dem thermoelektrischen Effekt handelt es sich um einen Mikroeffekt, der ausnutzt, dass zwischen Enden einer Metallspannstange eine elektrische Spannung entsteht, wenn in der Stange ein Temperaturgradient vorherrscht. Trotz des geringen Wirkungsgrads haben thermoelektrische Generatoren erhebliche Vorteile, da sie keine beweglichen Teile erfordern, aufgrund der verwendeten Materialien wartungsfrei sind und natürliche Wärmequellen bzw. Restwärme nutzbar machen.

Die Nutzung des elektromagnetischen Effektes ist beispielsweise aus passiven RFIDs bekannt, die Energie elektromagnetischer Strahlung, beispielsweise von Radiowellen, umsetzt. Schließlich wird beim Benutzen des photoelektrischen Effektes Lichtenergie, beispielsweise diffuse Umgebungsbeleuchtung, direkt für elektrische Verbraucher nutzbar gemacht. Beispielsweise kann der Energieernter Solarzellen zur Umwandlung von Licht in elektrischem Strom aufweisen.

Gemäß einer bevorzugten Ausführung ist der Energieernter dazu eingerichtet, die Energie von einem je Schutzbereich bereitgestellten Energieübertrager, der zum Übertragen von Energie eingerichtet ist, zu empfangen und bereitzustellen.

Ein Schutzbereich ist beispielsweise ein Gebäudeabschnitt, wie ein Raum, eine Halle, ein Teil einer Halle oder ähnliches. Es gibt keine Einschränkungen der Form und/oder der Anzahl von Schutzbereichen, die durch die Feuerlöscheinrichtung überwacht werden. Ein zur Übertragung von Energie je Schutzbereich eingerichteter Energieübertrager kann Energie unter Ausnutzung eines oder mehrerer der möglichen Effekte, die Energy Harvesting möglich machen, ausgelegt sein. Beispielsweise kann der Energieübertrager elektromagnetische Strahlung, beispielsweise Radiowellen, gezielte Wärme oder auch Licht emittieren. Der Energieübertrager kann hierfür entweder gerichtet auf eine oder mehrere Löschdüsen des Schutzbereiches ausgelegt sein, oder ungerichtet auf eine größere Anzahl von Löschdüsen einwirken. Der Energieübertrager kann aber auch gezielt Energie in die Fluidleitung und/oder das darin strömende Löschfluid einbringen. Dies kann beispielsweise, in dem Fall, in dem ein in der Fluidleitung strömendes Fluid leitfähig ist, ein elektrischer Strom sein, aber auch eine Temperaturerhöhung des Löschfluids und/oder eine nutzbare Strömung des Löschfluids durch die Fluidleitung sind vorstellbar.

Dadurch, dass der Energieernter die dedizierte Energie des Energieübetragers empfangen kann, ist eine höhere Leistungsaufnahme der Kommunikationseinheit bzw. des Steuerorgans möglich. Die durch den Energieernter erhaltene Energie ist nämlich nicht lediglich durch die Umgebungsenergie beschränkt, sondern wird durch die Kombination mit der von dem Energieübertrager eingebrachten Energiemenge erhöht. Beispielsweise können dadurch, ohne darauf beschränkt zu sein, in dem Energieernter höhere Spannungen erzeugt werden, was geringere Ströme ermöglichen kann.

Gemäß einer bevorzugten Ausführung weist der Energieernter ein Piezoelement auf.

Damit können insbesondere Vibrationen, die auf den Energieernter einwirken, in elektrischen Strom umgewandelt werden. Auch kann in einer anderen Ausführung das Piezoelement dazu eingerichtet sein, durch Drücke und/oder Druckänderungen, beispielsweise auch manuell, elektrische Spannungen zu erzeugen.

Gemäß einer bevorzugten Ausführung ist der Energieernter dazu eingerichtet, einen Druck oder eine Änderung des Druckes innerhalb der Fluidleitung zum Bereitstellen von Energie auszunutzen.

Auch für diese Ausführung weist der Energieernter vorzugsweise ein Piezoelement auf, das außerhalb oder innerhalb der Fluidleitung angeordnet ist. Besonders vorteilhaft lassen sich Drücke bzw. Druckänderungen innerhalb der Fluidleitung dann detektieren, wenn das Piezoelement nahezu unmittelbar in Kontakt mit dem Fluid steht. Dadurch werden die Drücke bzw. Druckänderungen vorzugsweise ohne abgeschwächt zu werden, zur Energieumwandlung an den Energieernter übertragen.

Gemäß einer bevorzugten Ausführung ist der Energieernter dazu eingerichtet, eine Temperatur oder ein Durchströmen der Fluidleitung zum Bereitstellen von Energie auszunutzen.

Diese bevorzugte Ausführung eignet sich besonders dann, wenn ein kontinuierliches Durchströmen bzw. ein regelmäßiges Durchströmen der Fluidleitung erforderlich ist. Wird beispielsweise dazu, einen zyklischen Austausch des Löschfluides zu ermöglichen, notwendigerweise die Fluidleitung durchströmt, eignet sich diese Durchströmung zur Umwandlung in Energie durch den Energieernter. Eine erhöhte Temperatur des Löschfluids, beispielsweise gegenüber der Umgebung, oder auch umgekehrt eine niedrigere Temperatur des Löschfluids gegenüber der Umgebung eignet sich ebenso vorteilhaft zur Umwandlung mittels des Energieernters in weiteren bevorzugten Ausführungen.

Gemäß einer bevorzugten Ausführung ist der Energieernter dazu eingerichtet, einen elektrischen Strom, der mittels eines innerhalb der Fluidleitung angeordneten Fluids geleitet wird, als Energie bereitzustellen.

Für den Fall, dass das Löschfluid eine geeignete Leitfähigkeit aufweist, kann Strom unmittelbar über das Löschfluid geleitet werden. Beispielsweise können elektrische Ströme, insbesondere Wechselströme, auch auf Seiten der Löschdüse detektiert werden und mittels des Energieernters umgewandelt werden.

Gemäß einer bevorzugten Ausführung implementiert der Energieernter wenigstens zwei unterschiedliche Formen des Energy Harvestings.

Dadurch, dass mindestens zwei unterschiedliche Formen des Energy Harvestings implementiert sind, ist die erfindungsgemäße Löschdüse auch in dem Fall, in dem eine der zwei Energiequellen ausfällt, zur sicheren Versorgung der Kommunikationseinheit bzw. des Steuerorgans mit Strom ausgebildet. Dadurch wird die Betriebssicherheit und Ausfallsicherheit erhöht.

Gemäß einer bevorzugten Ausführung weist die Löschdüse weiter einen Energiespeicher auf, der dazu eingerichtet ist, von dem Energieernter bereitgestellte Energie zwischenzuspeichern, wobei eine Kapazität des Energiespeichers derart ausgelegt ist, dass ein sicherer Betrieb bei Ausfall des Energy Harvestings bis zu einem Wiederherstellen der insbesondere kabellosen Energieübertragung gewährleistet ist.

Dadurch, dass die Kapazität des Energiespeichers zumindest einen Zeitpunkt bis zum Wiederherstellen des Energy Harvestings überbrückt, ist ein dauerhafter Betrieb ohne Unterbrechungen der Löschdüse gewährleistet. Insbesondere bleibt auch bei einem Ausfall des Energie Harvestings, beispielsweise durch Ausfall des Energieernters oder auch durch Ausfall einer bereitgestellten, z.B. kabellos übertragenen Energie, hinreichend Zeit, beispielsweise für Wartung und Austausch, verfügbar. Vorzugsweise ist die Kommunikationseinheit dazu eingerichtet, den Ausfall zu kommunizieren. Die Dauer, die mittels des Energiespeichers überbrückt werden kann, kann natürlich an die Anforderungen der tatsächlichen Anwendung abgestimmt sein. Vorzugsweise sind für die Betriebssicherheit mehrere redundante Kommunikationswege und/oder ein Multiplexen der Kommunkation vorgesehen.

Gemäß einer weiteren bevorzugten Ausführung weist die Löschdüse eine steuerbare Auslösung mit einem Gehäuse und einem darin angeordneten und durch ein Dichtelement abgedichteten Absperrventil auf.

Beispielsweise weist das Dichtelement dieser oder anderer bevorzugter Ausführungen eine Abdichttellerfeder auf, die das Absperrventil anpresst. Auch andere geeignete Dichtelemente sind natürlich vorteilhaft einsetzbar.

Das Absperrventil ist in einer Ausführung als Magnetventil und/oder ein Piezoventil ausgebildet und ist mit Ausgängen zum Anschluss an den Energiespeicher in Verbindung mit dem Steuerorgan versehen.

Alternativ oder zusätzlich weist gemäß einer bevorzugten Ausführung die steuerbare Auslösung ein temperaturempfindliches, zerstörbares Fühlerelement auf. Das temperaturempfindliche zerstörbare Fühlerelement ist mit einem thermischen Heizelement gekoppelt und das Heizelement ist mit Ausgängen zum Anschluss an den Energiespeicher in Verbindung mit dem Steuerorgan versehen.

Durch Ansteuerung des thermischen Heizelementes mit der in dem Energiespeicher gespeicherten Energie wird das zerstörbare Fühlerelement derart erwärmt, dass es das Löschfluid freigibt und damit die Auslösung der Löschdüse bewirkt. Diese Art der steuerbaren Auslösung ermöglicht eine besonders zuverlässig und mit geringem Energieeinsatz wirkenden Auslösung. Natürlich sind auch andere Arten der Auslösung, beispielsweise mechanische Ventile, alternativ oder in Kombination vorstellbar.

Gemäß einem zweiten Aspekt wird die Aufgabe durch eine Feuerlöscheinrichtung nach Anspruch 7 zur selektiven Erkennung und Löschung von Bränden in mindestens einem Schutzbereich gelöst. Die Feuerlöscheinrichtung weist je Schutzbereich eine oder mehrere Löschdüsen gemäß dem ersten Aspekt und ferner je Schutzbereich einen Energieübertrager auf, der zum Übertragen von Energie an die eine oder mehreren Löschdüsen eingerichtet ist.

Mit der Feuerlöscheinrichtung gemäß dem zweiten Aspekt lassen sich sämtliche der für die Löschdüse gemäß dem ersten Aspekt beschriebenen Vorteile erreichen. Insbesondere lässt sich die Feuerlöscheinrichtung in vorteilhafter Weise mit sämtlichen der zuvor als bevorzugt beschriebenen Ausführungen kombinieren.

Nachdem die Feuerlöscheinrichtung einen Energieübertrager je Schutzbereich aufweist, der zum Übertragen von Energie eingerichtet ist, ist eine zuverlässige Energieversorgung der einen oder mehreren Löschdüsen gewährleistet. Sämtliche denkbare, geeignete, Energieübertrager, die vorzugsweise kabellos ausgestaltet sind, sind hierbei einsetzbar. Die Aufteilung der Feuerlöscheinrichtung im Schutzbereich ermöglicht, dass beispielsweise eine Auslösung der Löschdüsen selektiv für einen oder mehrere Schutzbereiche möglich ist. Vorzugsweise erfolgt eine Auslösung der Löschdüsen demnach für einen Schutzbereich gemeinsam. Wenn selektives Auslösen, beispielsweise auf bestimmte Bereiche beschränkt, gewünscht ist, so sind mehrere Schutzbereiche vorzusehen. Dies vereinfacht weiter die Einrichtung. Beispielsweise kann eine sichere Löschung innerhalb eines Schutzbereiches durch eine einzige Steueranweisung umgesetzt werden.

Gemäß einer bevorzugten Ausführung steht der Energieübertrager in Kommunikationsverbindung mit der Brandmelder- und/oder Löschsteuerzentrale und ist dazu eingerichtet, mit der oder den Löschdüsen zu kommunizieren, wobei die Kommunikation der Löschdüsen mit der Brandmelder- und/oder Löschsteuerzentrale über den Energieübertrager erfolgt.

Demnach stellt in dieser Ausführung der Energieübertrager die Schnittstelle zwischen Brandmelder und/oder Löschsteuerzentrale und Löschdüse dar. Der Energieübertrager kann demnach zugleich mit den Löschdüsen als auch mit der Brandmelder- und/oder Löschsteuerzentrale kommunizieren. Vorzugsweise ist die Kommunikation zwischen Löschdüsen und Energieübertrager bidirektional ausgebildet, das heißt, dass sowohl von dem Energieübertrager zu der Löschdüse als auch anders herum eine Kommunikation ermöglicht ist. Demnach ist der Energieübertrager vorzugsweise eingerichtet, Anweisungen von der Brandmelder- und/oder Löschsteuerzentrale entgegenzunehmen und an die Löschdüse zu übertragen und gleichzeitig auch, beispielsweise von in den Löschdüsen angeordneten Sensormitteln, empfangene Messsignale oder Detektionssignale über den gleichen Kommunikationskanal von der Löschdüse zu erhalten. Alternativ oder zusätzlich zu Sensoren, die an den Löschdüsen angeordnet sind, ist die Feuerlöscheinrichtung auch eingerichtet, beispielsweise autark oder separat arbeitende Sensoren aufzunehmen, die ebenso ihre Detektionssignale direkt an die Brandmelder- und/oder Löschsteuerzentrale oder an den Energieübertrager kommunizieren.

Gemäß einer bevorzugten Ausführung ist der Energieübertrager dazu eingerichtet, die Kommunikation zu einem Energieempfänger auf die übertragene Energie aufzuschalten beziehungsweise diese damit zu überlagern.

Indem die Kommunikation auf die übertragene Energie aufgeschaltet bzw. diese überlagert, kann ein und derselbe Kommunikationskanal, das heißt die sowieso zu übertragene Energie, durch eine weitere Funktion ergänzt werden. Dies führt zu einer geringen Gesamtkomplexität. Insbesondere ist es nämlich dann nicht nötig, dass neben dem Energieübertragungskanal ein weiterer dedizierter Kommunikationskanal vorzusehen ist.

Gemäß einer bevorzugten Ausführung umfasst die übertragene Energie elektromagnetische Energie in Form eines gerichteten Lichtstrahls oder eines anderen gerichteten elektromagnetischen Impulses.

Ein gerichteter Lichtstrahl oder ein anderer gerichteter elektromagnetischer Impuls ist eine besonders wirksame Form, Energie von dem Energieübertrager auf die Löschdüse zu übertragen. Darüber hinaus eignen sich gerichtete Lichtstrahlen bzw. elektromagnetische Impulse über Modulationen, beispielsweise Frequenz- oder Amplitudenmodulationen, auch dazu, Kommunikationssignale über den gleichen Kanal zu ertragen.

Gemäß einer bevorzugten Ausführung umfasst die Feuerlöscheinrichtung weiter wenigstens eine Fluidleitung zur Bereitstellung von Löschfluid bei der oder den Löschdüsen, wobei die Fluidleitung elektrisch isoliert ist, und der Energieernter dazu eingerichtet ist, mittels eines elektrisch leitfähigen Fluids innerhalb der Fluidleitung übertragene elektrische Energie bereitzustellen.

Die Fluidleitung, die dazu eingerichtet ist, das Löschfluid zur Brandbekämpfung hindurchströmt, ist zur Gewährleistung des Brandschutzes im Zusammenhang mit Brandschutzsystemen erforderlich. Dadurch, dass der Energieernter ein elektrisch leitfähiges Fluid, das innerhalb der Fluidleitung angeordnet ist, verwendet, um elektrische Energie zu ernten, wird die typischerweise notwendige Fluidleitung um eine zusätzliche Funktion, nämlich die Energieübertragung, ergänzt. Dadurch entfällt der zusätzliche Verkabelungsaufwand, beispielsweise, wenn elektrische Kabel zur Energieübertragung benötigt würden.

Gemäß einer bevorzugten Ausführung erfolgt die Aktivierung der Löschdüsen im Fall eines Kommunikationsausfalls automatisch.

Dadurch, dass die Aktivierung der Löschdüsen bei einem Kommunikationsausfall automatisch erfolgt, ist sichergestellt, dass eine wirksame Brandbekämpfung nicht deshalb ausbleibt, weil die Kommunikation zwischen Löschdüse und Energieübertrager ausfällt. Vorzugsweise kann ein Schwellwert, beispielsweise eine bestimmte Zeitdauer, vorgesehen werden, der zur Wiederherstellung der Kommunikation ausgelegt ist. Wenn innerhalb dieses Schwellwertes die Kommunikation nicht wiederhergestellt werden kann, erfolgt automatisch die Aktivierung der Löschdüsen. Die Zeitdauer der Auslösungsverzögerung ist an den Einzelfall anzupassen und hängt unter anderem von potentiellen Brandgefahren in dem Schutzbereich ab.

Gemäß einem dritten Aspekt wird die Aufgabe durch ein Feuerlöschsystem nach Anspruch 12 mit einer Feuerlöscheinrichtung gemäß dem zweiten Aspekt und einer Brandmelder- und/oder Löschsteuerzentrale gelöst.

Gemäß einem vierten Aspekt wird die Aufgabe durch ein Verfahren zum Betreiben einer Löschdüse einer Feuerlöscheinrichtung, nach Anspruch 13, gelöst.

Gemäß einer bevorzugten Ausführung umfasst das Verfahren ein Übertragen von Energie an den Energieernter der Löschdüse mittels eines Energieübertragers.

Gemäß einem fünften Aspekt wird die Aufgabe durch eine Verwendung eines in einem Sprinklerrohr befindlichen Fluids zur Energieübertragung, nach Anspruch 14, gelöst.

Auch das Feuerlöschsystem gemäß dem dritten Aspekt, das Verfahren gemäß dem vierten Aspekt und die Verwendung gemäß dem fünften Aspekt ermöglichen die gleichen vorteilhaften Wirkungen, wie sie für den ersten und zweiten Aspekt der Erfindung beschrieben wurden. Ebenfalls sind Kombinationen des erfindungsgemäßen Feuerlöschsystems, des erfindungsgemäßen Verfahrens sowie der erfindungsgemäßen Verwendung mit sämtlichen als bevorzugt beschriebenen Ausführungen des ersten und zweiten Aspektes vorteilhaft umsetzbar.

Feuerlöscheinrichtungen mit Löschfluidleitungen zum Führen eines Löschfluids sind grundsätzlich bekannt. Die Feuerlöscheinrichtung umfasst in der Regel ein, zwei oder mehrere Löschvorrichtungen, insbesondere Sprinkler und/oder Löschdüsen. Die Löschvorrichtungen sind in heutigen Systemen oftmals elektrisch mit weiteren Komponenten der Feuerlöscheinrichtung und/oder weiteren Vorrichtungen eines Brandschutzsystems gekoppelt. Die Kopplung ermöglicht einerseits die Versorgung von Komponenten der Feuerlöscheinrichtung mit elektrischer Energie und darüber hinaus das Senden und Empfangen von Signalen.

Wie erwähnt hat die Anbindung über stromführende und/oder signalführende Kabel allerdings mehrere Nachteile. Zum einen können bereits bei der Verlegung der Kabel Fehler auftreten, die oftmals erst in einem Brandfall detektierbar sind und somit die Ausfallsicherheit der Sprinkleranlage gefährden. Einfache alternative Lösungen, wie beispielsweise Batterien und/oder Akkumulatoren, scheiden aufgrund des damit verbundenen Wartungsaufwandes aus, da in Großanlagen häufig mehrere Dutzend oder auch mehrere Hundert Sprinkler und/oder Löschdüsen angeordnet sein können.

Vor diesem Hintergrund ist es ebenfalls eine Aufgabe der vorliegenden Erfindung, eine Feuerlöscheinrichtung, ein Brandschutzsystem und ein Verfahren bereitzustellen, die einen oder mehrere der im Vorherigen genannten Nachteile vermindern oder beseitigen. Ferner ist es eine Aufgabe der vorliegenden Erfindung, eine Lösung bereitzustellen, die einen reduzierten Installations- und/oder Wartungsaufwand bietet.

In einem weiteren Aspekt wird demnach eine Feuerlöscheinrichtung, insbesondere zur selektiven Erkennung und/oder Bekämpfung von Bränden in mindestens einem Schutzbereich, vorgeschlagen. Die Feuerlöscheinrichtung umfasst eine Löschfluidleitung zum Führen eines Löschfluids, wobei an der Löschfluidleitung eine Löschvorrichtung , insbesondere ein Sprinkler und/oder eine Löschdüse, angeordnet ist, und dabei die Löschfluidleitung angeordnet und ausgebildet ist, elektrische Energie zu der Löschvorrichtung zu leiten.

Vorzugsweise ist die Löschvorrichtung als Sprinkler ausgebildet und weist wenigstens eine Steuereinheit auf, wobei der Sprinkler mindestens einen Löschfluideinlass und mindestens einen Löschfluidauslass mit einer zwischen diesen verlaufenden Fluidverbindung, vorzugsweise zwei oder mehr Löschfluidauslässe, aufweist, wobei dem Löschfluidauslass eine der Steuereinheiten zum selektiven Freigeben oder Sperren der Fluidverbindung zwischen Löschfluideinlass und Löschfluidauslass zugeordnet ist, und wobei die Steuereinheit elektrisch mit der Löschfluidleitung gekoppelt ist.

Vorzugsweise weist der Sprinkler mindestens eine Sensorvorrichtung auf, wobei die Sensorvorrichtung eingerichtet ist, eine Brandquelle zu detektieren und insbesondere dazu eingerichtet ist, die Brandquelle zu lokalisieren, und wobei die Sensorvorrichtung mit der Löschfluidleitung elektrisch gekoppelt ist.

Vorzugsweise umfasst die Löschvorrichtung eine Kommunikationseinheit, die zur Kommunikation mit einer Steuerungsvorrichtung, vorzugsweise einer Brandmelder- und/oder Löschsteuerzentrale, eingerichtet ist, und wobei die Kommunikationseinheit angeordnet und ausgebildet ist, mit der Steuerungsvorrichtung über die Löschfluidleitung zu kommunizieren.

Vorzugsweise umfasst die Feuerlöscheinrichtung eine Energiekopplungsvorrichtung, die angeordnet und ausgebildet ist, die Löschfluidleitung elektrisch zu koppeln mit a) der Löschvorrichtung, und/oder b) der Sensorvorrichtung, und/oder c) der Kommunikationseinheit, und wobei die Energiekopplungsvorrichtung vorzugsweise an der Löschvorrichtung angeordnet ist.

Vorzugsweise ist die Löschfluidleitung elektrisch mit einer Energiequelle koppelbar.

Vorzugsweise ist die Löschfluidleitung durch ein Leitungsrohr ausgebildet, wobei ferner das Leitungsrohr aus einem elektrisch leitfähigen Material besteht oder ein elektrisch leitfähiges Material umfasst, und/oder das Leitungsrohr derart angeordnet und ausgebildet ist, dass elektrische Energie durch das Leitungsrohr fließbar ist.

Vorzugsweise weist die Löschfluidleitung eine Leitschicht, insbesondere eine Leitbeschichtung, auf, wobei die Leitschicht aus einem elektrisch leitfähigen Material besteht oder ein elektrisch leitfähiges Material umfasst, und wobei die Leitschicht an einer Außenumfangsfläche und/oder einer Innenumfangsfläche des Leitungsrohrs angeordnet ist, wobei die Löschfluidleitung angeordnet und ausgebildet ist, elektrische Energie durch die Leitschicht zu der Löschvorrichtung zu leiten, und wobei das Leitungsrohr vorzugsweise aus im Wesentlichen nicht elektrisch leitenden Material besteht oder dieses umfasst.

Vorzugsweise weist die Löschfluidleitung eine Isolierschicht, insbesondere eine Isolierbeschichtung, und die Leitschicht auf, wobei die Leitschicht in radialer Richtung der Löschfluidleitung zwischen dem Leitungsrohr und der Isolierschicht angeordnet ist, und wobei vorzugsweise die Isolierschicht in radialer Richtung innen von dem Leitungsrohr angeordnet ist und/oder vorzugsweise die Isolierschicht in radialer Richtung außen von dem Leitungsrohr angeordnet ist.

Vorzugsweise ist die Löschfluidleitung angeordnet und ausgebildet, elektrische Energie innerhalb eines in der Löschfluidleitung befindlichen Löschfluids zu leiten.

Vorzugsweise umfasst die Feuerlöscheinrichtung eine Energieeinspeisevorrichtung, die eingerichtet ist, elektrische Energie in ein in der Löschfluidleitung befindliches Löschfluid einzuspeisen.

Vorzugsweise umfasst die Feuerlöscheinrichtung zwei oder mehr Löschfluidleitungen zum Führen eines Löschfluids, und/oder zwei oder mehr an der Löschfluidleitung oder an den zwei oder mehr Löschfluidleitungen angeordnete Löschvorrichtungen.

In einem weiteren Aspekt wird ein Brandschutzssystem vorgeschlagen, umfassend eine Feuerlöscheinrichtung nach der Feuerlöscheinrichtung gemäß dem vorstehenden Aspekt oder einer bevorzugten Ausgestaltung, eine Löschfluidquelle, insbesondere ein Löschfluidbehälter, vorzugsweise ein Druckluftwasserbehälter, und eine Löschfluidpumpe.

In einem weiteren Aspekt wird ein Verfahren zum Betreiben einer Brandbekämpfungseinrichtung insbesondere zur selektiven Erkennung und/oder Bekämpfung von Bränden in mindestens einem Schutzbereich vorgeschlagen, umfassend Führen eines Löschfluids in einer Löschfluidleitung mit einer Löschvorrichtung, Leiten von elektrischer Energie durch die Löschfluidleitung, und vorzugsweise Betreiben einer Löschvorrichtung, und/oder einer Sensorvorrichtung, und/oder einer Kommunikationseinheit.

Weitere Vorteile und Ausgestaltungen werden nachfolgend mit Verweis auf die beigefügten Figuren beschrieben. Hierbei zeigen:
- Fig. 1: schematisch und exemplarisch eine erfindungsgemäße Feuerlöscheinrichtung;
- Fig. 2: schematisch und exemplarisch eine erfindungsgemäße Löschdüse;
- Fig. 3: schematisch und exemplarisch eine Feuerlöscheinrichtung;
- Fig. 4: schematisch und exemplarisch einen Querschnitt einer Fluidleitung;
- Fig. 5: schematisch und exemplarisch einen Querschnitt einer Fluidleitung; und
- Fig. 6: schematisch und exemplarisch einen Querschnitt einer Fluidleitung.

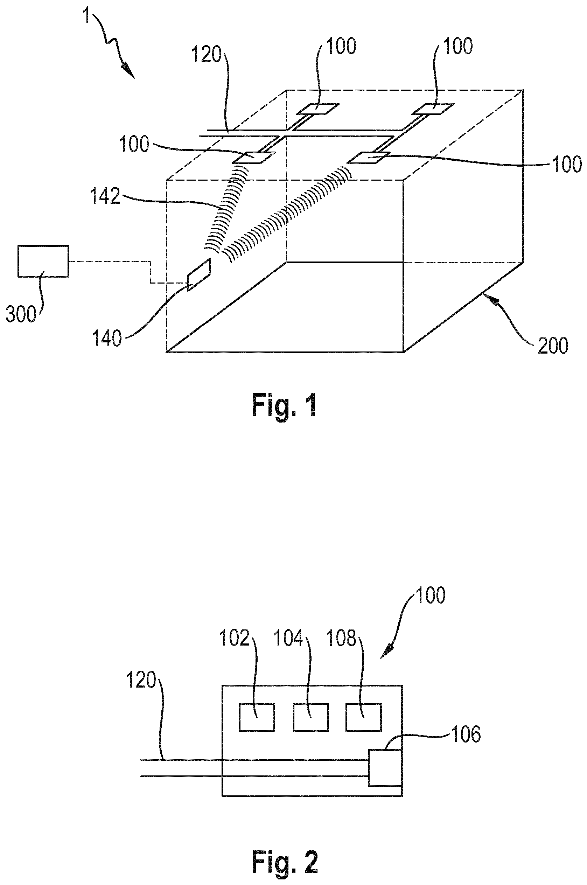

Fig. 1 zeigt schematisch und exemplarisch eine erfindungsgemäße Feuerlöscheinrichtung 1 zum Schutz, insbesondere zur Bekämpfung eines detektierten Brandes, wenigstens eines Schutzbereiches 200. Die Feuerlöscheinrichtung 1 umfasst ein Fluidleitungsnetz mit einer Fluidleitung 120 und mehreren in Verbindung mit der Fluidleitung 120 stehenden Löschdüsen 100. In einem bevorzugten Fall weist die Feuerlöscheinrichtung 1 auch Sensormittel, beispielsweise als Teil der Löschdüsen 100, auf, die zur Detektion von Bränden ausgelegt sind. Dann ist die Feuerlöscheinrichtung 1 auch zur Überwachung des oder der Schutzbereiche 200 ausgebildet.

Die Löschdüse 100 ist zum Energieempfang ausgebildet. In diesem Ausführungsbeispiel ist die Löschdüse 100 eingerichtet, Energie 142 von einem Energieübertrager 140 aufzunehmen. Der Energieübertrager 140 kann beispielsweise eingerichtet sein, elektromagnetische Energie in Form von Licht oder ähnlichem zu übertragen. Der Energieübertrager 140 ist optional in Verbindung mit einer Steuereinheit 300, die Funktionen und Auslösungen der Feuerlöscheinrichtung 1 zentral koordiniert. Die Steuereinheit 300 ist beispielsweise als Teil einer Brandmelder- und/oder Löschsteuerzentrale ausgebildet, kann aber auch eine beliebige weitere SPS oder proprietäre Steuereinheit umfassen.

Während in dem Ausführungsbeispiel der Fig. 1 die Energie 142 von dem Energieübertrager 140 an den Energieernter 102 gesendet wird, so ist in anderen Ausführungen auch eine alternative Übertragung der Energie 142 möglich. Beispielsweise kann die Energie 142 mittels der Fluidleitung 120, beispielsweise durch eine Strömung des darin befindlichen Fluides oder ein elektrisch leitfähiges Fluid, übertragen werden.

Fig. 2 zeigt schematisch und exemplarisch die Löschdüse 100 im Detail. Die Löschdüse 100 weist einen Energieernter 102, eine Kommunikationseinheit 104, ein Steuerorgan 106 und einen Energiespeicher 108 auf. Der Energieernter 102 ist dazu eingerichtet, Energie mittels Energy Harvesting aufzunehmen. Die von dem Energieernter 102 geerntete Energie dient zum Betreiben der Kommunikationseinheit 104 sowie zum Auslösen des Steuerorgans 106. Die geerntete Energie kann dazu in dem Energiespeicher 108 zwischengespeichert werden, so dass eine Auslösung des Steuerorgans 106, beispielsweise eines Ventils zum Öffnen der Fluidleitung 120, zu jedem Zeitpunkt gewährleistet ist.

Der Energieernter 102 kann sämtliche Formen des Energy Harvestings implementierten. Beispielswiese kann dieser, wie in Fig. 1 beispielhaft gezeigt, Energie 142 von einem Energieübertrager 140 empfangen. Der Energieernter 102 kann aber auch in der Fluidleitung 120 vorhandene Energie ernten, beispielsweise Vibrationen, Strömungen oder auch elektrische Ströme, die in einem Löschfluid oder auch der Fluidleitung 120 fließen. Das ist beispielsweise möglich, wenn die Fluidleitung 120 eine geeignete Beschichtung aufweist.

Die Kommunikationseinheit 104 ist dazu eingerichtet, beispielsweise mit dem Energieübertrager 140 oder einem vergleichbaren geeigneten Kommunikationsempfänger und/oder Kommunikationssender zu kommunizieren, um in einem Brandfall mittels des Steuerorgans 106 eine Freigabe des Löschfluides zu bewirken. Optional kann die Löschdüse 100 zusätzlich Sensormittel zum Detektieren eines Brandes aufweisen. Ein detektiertes Brandsignal kann dann ebenfalls über die Kommunikationseinheit 104 beispielsweise an den Energieübertrager 140 und dann an die Steuereinheit 300 übertragen werden. Auch ist die Kommunikationseinheit 104 vorzugsweise eingerichtet, beispielsweise in einem Störungsfall, der durch eine Selbstüberwachung der Gerätefunktionen der Löschdüse 100 erkannt wird, Stör- und/oder Statusmeldungen zu übertragen. In anderen Beispielen kann die Kommunikationseinheit 104 auch unabhängig von erkannten Störungen regelmäßige oder unregelmäßige Statusmeldungen kommunizieren.

Obwohl in Fig. 2 exemplarisch ein einziger Schutzbereich 200 gezeigt ist, so ist die erfindungsgemäße Feuerlöscheinrichtung 1 ebenso auf eine beliebige Anzahl an Schutzbereichen anwendbar. Insbesondere ermöglicht die Aufteilung in Schutzbereiche eine selektive Brandbekämpfung nur in dem Teilbereich, in dem tatsächlich auch ein Brand bzw. eine Brandgefahr existiert. Auch können zusätzlich oder alternativ mehrere Brandbereiche/Gefahrenbereiche zusammengefasst werden, beispielsweise denn, wenn von einem Bereich für die umliegenden Bereiche eine besondere Gefahr ausgeht.

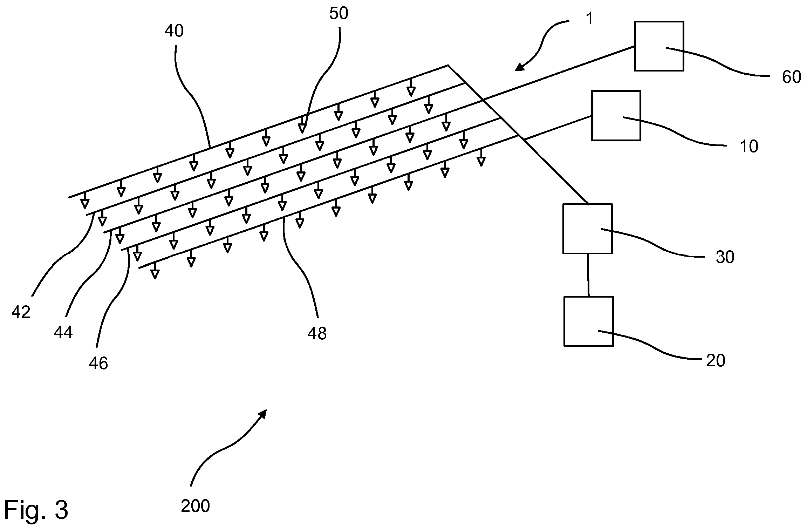

Fig. 3 zeigt schematisch und exemplarisch eine weitere Ausgestaltung einer Feuerlöscheinrichtung 1, die mit den Ausführungen der Fig. 1 und 2 kombinierbar ist.

Die Feuerlöscheinrichtung 1 umfasst eine erste Löschfluidleidung 40, eine zweite Löschfluidleidung 42, eine dritte Löschfluidleidung 44, eine vierte Löschfluidleitung 46 und eine fünfte Löschfluidleidung 48, an der jeweils mehrere als Sprinkler 50 ausgebildete Löschvorrichtungen angeordnet sind. Mittels einer Löschfluidpumpe 30 wird Löschfluid aus einer Löschfluidquelle 20 im Auslösefall durch die erste bis fünfte Löschfluidleitung 40-48 gepumpt. Alternativ zu dem Sprinkler 50 sind auch andere Löschvorrichtungen, beispielsweise Löschdüsen und insbesondere steuerbare Löschdüsen, einsetzbar.

In diesem Ausführungsbeispiel ist jede der Löschfluidleitungen 40, 42, 44, 46, 48 mit einer Energiequelle 10 gekoppelt, wobei die Löschfluidleitung 40, 42, 44, 46, 48 selbst die Energieübertragung ermöglicht. Es handelt sich somit um eine elektrisch leidende Löschfluidleitung, wodurch die Notwendigkeit separat auszuführender, elektrischer Anschlüsse an den Sprinklern 50 entfällt. Der Montage- und Wartungsaufwand der Feuerlöscheinrichtung 1 wird dadurch verringert.

Jede der Sprinkler 50 kann eine eigene Steuerungsvorrichtung 60 aufweisen, die alternativ auch zentral für die gesamte Feuerlöscheinrichtung 1 bereitgestellt werden kann. Die Steuerungsvorrichtung 60 kann selektiv eine Auslösung eines oder mehrerer der Sprinkler 50 bewirken, oder alternativ oder zusätzlich auch Daten von den einzelnen Sprinklern 50 erhalten und beispielsweise an eine Brandmelder- und/oder Löschsteuerzentrale übersenden. Besonders bevorzugt umfasst einer, mehrere oder sämtliche der Sprinkler 50 zu diesem Zweck Sensoren, wie Temperatursensoren oder Rauchgassensoren.

Die Kommunikation zwischen Sprinkler 50 und Brandmelder- und/oder Löschsteuerzentrale erfolgt vorzugsweise ebenfalls über die Löschfluidleitung, wobei vorzugsweise das Kommunikationssignal über das elektrische Spannungsversorgungssignal überlagert wird. Auch andere Kommunikationskanäle, beispielsweise drahtlose Kommunikationskanäle, sind vorstellbar.

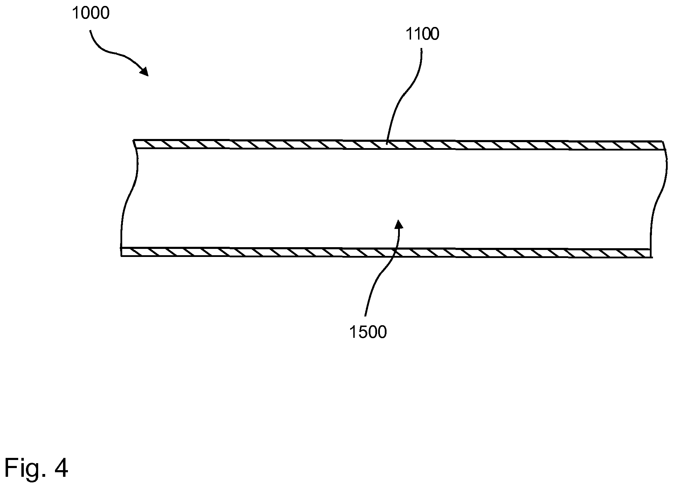

Fig. 4 zeigt schematisch und exemplarisch einen Querschnitt einer Löschfluidleitung 1000, die beispielsweise als eine der Löschfluidleitungen 40-48 der Fig. 3 zum Einsatz kommt. Die Löschfluidleitung 1000 umfasst ein Leitungsrohr 1100, das aus einem elektrisch leitfähigen Material besteht oder ein elektrisch leitfähiges Material umfasst, und/oder das derart angeordnet und ausgebildet ist, dass elektrische Energie durch das Leitungsrohr 1100 fließen kann. Im Inneren der Löschfluidleitung 1000 ist ein Hohlraum 1500, in dem das Löschfluid strömen kann.

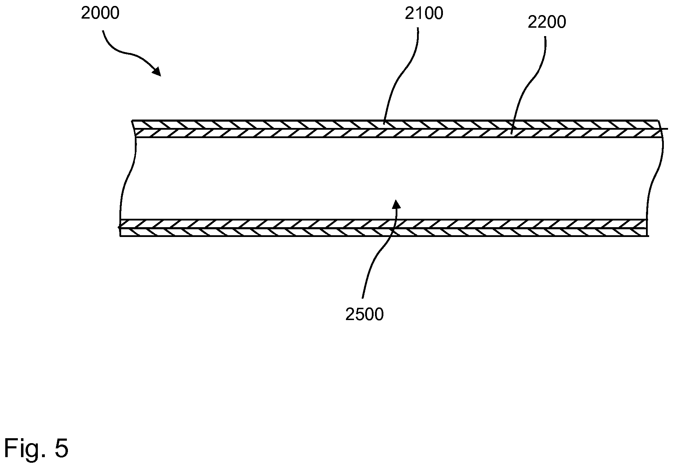

Fig. 5 zeigt schematisch und exemplarisch einen Querschnitt einer weiteren Löschfluidleitung 2000, die zusätzlich zu einem Leitungsrohr 2100 wie die in Fig. 4 gezeigte Löschfluidleitung 1000 eine Leitschicht 2200 insbesondere eine Leitbeschichtung, aufweist. Die Leitschicht 2200 besteht aus einem elektrisch leitfähigen Material besteht oder umfasst ein elektrisch leitfähiges Material. Die Leitschicht 2200 ist an einer Außenumfangsfläche und/oder einer Innenumfangsfläche des Leitungsrohrs 2100 angeordnet. Die Löschfluidleitung 2000 ist in diesem Beispiel dazu angeordnet und ausgebildet, elektrische Energie durch die Leitschicht 2200 zu der Löschvorrichtung zu leiten. Vorzugsweise besteht in diesem Fall das Leitungsrohr 2100 aus im Wesentlichen nicht elektrisch leitenden Material oder umfasst dieses. Im Inneren der Löschfluidleitung 2000 ist ein Hohlraum 2500, in dem das Löschfluid strömen kann.

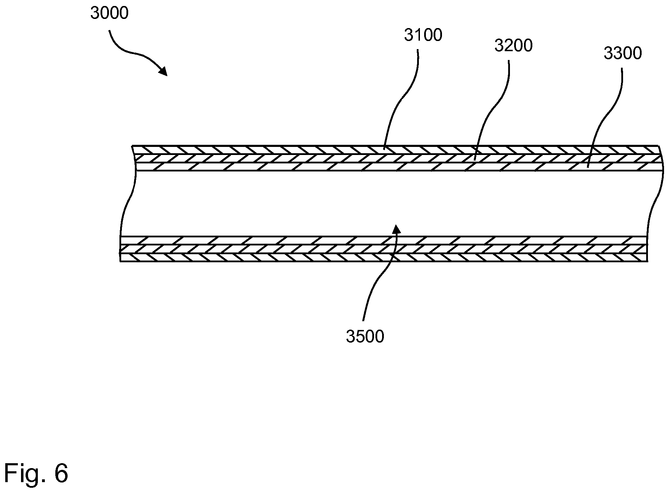

Fig. 6 zeigt schematisch und exemplarisch einen Querschnitt einer weiteren Löschfluidleitung 3000, die eine Isolierschicht 3300, insbesondere eine Isolierbeschichtung, und eine Leitschicht 3200 aufweist. Die Leitschicht 3200 ist in radialer Richtung der Löschfluidleitung 3000 zwischen einem Leitungsrohr 3100, das ebenfalls in den Löschfluidleitungen 1000 und 2000 enthalten war, und der Isolierschicht 3300 angeordnet. Vorzugsweise ist die Isolierschicht 3300 in radialer Richtung innen von dem 3100 angeordnet und/oder ist vorzugsweise die Isolierschicht 3300 in radialer Richtung außen von dem Leitungsrohr 3100 angeordnet. Zusätzlich zu den in Fig. 5 für die Löschfluidleitung 2000 gezeigten Elementen umfasst die Löschfluidleitung 3000 demnach die Isolierschicht 3300. Im Inneren der Löschfluidleitung 3000 ist ein Hohlraum 3500, in dem das Löschfluid strömen kann.

### Bezugszeichenliste

- 1: Feuerlöscheinrichtung
- 5: Schutzbereich
- 10: Energiequelle
- 20: Löschfluidquelle
- 30: Löschfluidpumpe
- 40: erste Löschfluidleitung
- 42: zweite Löschfluidleitung
- 44: dritte Löschfluidleitung
- 46: vierte Löschfluidleitung
- 48: fünfte Löschfluidleitung
- 50: Sprinkler
- 60: Steuerungsvorrichtung
- 100: Löschdüse
- 102: Energieernter
- 104: Kommunikationseinheit
- 106: Steuerorgan
- 108: Energiespeicher
- 120: Fluidleitung
- 140: Energieübertrager
- 142: Energie
- 200: Schutzbereich
- 300: Steuereinheit
- 1000: Löschfluidleitung
- 1100: Leitungsrohr
- 1500: Hohlraum
- 2000: Löschfluidleitung
- 2100: Leitungsrohr
- 2200: Leitschicht
- 2500: Hohlraum
- 3000: Löschfluidleitung
- 3100: Leitungsrohr
- 3200: Leitschicht
- 3300: Isolierschicht
- 3500: Hohlraum

## Patentansprüche

1. Löschdüse (100) einer Feuerlöscheinrichtung (1) zur selektiven Erkennung und Bekämpfung von Bränden in mindestens einem Schutzbereich (200), wobei die Löschdüse (100) aufweist:
- eine Kommunikationseinheit (104), die zur Kommunikation mit einer Steuereinheit (300) der Feuerlöscheinrichtung (1) eingerichtet ist,
- ein Steuerorgan (106), das zum Steuern der Löschdüse (100) eingerichtet ist, wobei die Löschdüse (100) mit mindestens einer Fluidleitung (120) verbindbar ist und das Steuerorgan (106) zum selektiven Freigeben und/oder Sperren eines Durchlasses eines in der Fluidleitung (120) strömenden Löschfluids durch die Löschdüse (100) eingerichtet ist, **dadurch gekennzeichnet, dass** die Löschdüse (100) ferner aufweist:
- einen Energieernter (102), der zum Bereitstellen von Energie (142) für wenigstens die Kommunikationseinheit (104) und das Steuerorgan (106) eingerichtet ist,
wobei der Energieernter (102) dazu eingerichtet ist, Energie unter Ausnutzung eines piezoelektrischen Effekts, eines thermoelektrischen Effekts, eines elektromagnetischen Effekts, eines photoelektrischen Effekts und/oder von Strömungsenergie, bereitzustellen.

2. Löschdüse (100) nach Anspruch 1, wobei der Energieernter (102) dazu eingerichtet ist, die Energie (142) von einem je Schutzbereich (200) bereitgestellten Energieübertrager (140), der zum Übertragen von Energie (142) eingerichtet ist, zu empfangen und bereitzustellen.

3. Löschdüse (100) nach einem der vorstehenden Ansprüche, wobei der Energieernter (102) dazu eingerichtet ist, einen Druck oder eine Änderung des Druckes innerhalb der Fluidleitung zum Bereitstellen von Energie auszunutzen, und/oder wobei der Energieernter (102) dazu eingerichtet ist, eine Temperatur oder ein Durchströmen der Fluidleitung zum Bereitstellen von Energie auszunutzen, und/oder wobei der Energieernter (102) dazu eingerichtet ist, einen elektrischen Strom, der mittels eines innerhalb der Fluidleitung angeordneten Fluids geleitet wird, als Energie (142) bereitzustellen.

4. Löschdüse (100) nach einem der vorstehenden Ansprüche, wobei der Energieernter (102) wenigstens zwei unterschiedliche Formen des Energieerntes implementiert.

5. Löschdüse (100) nach einem der vorstehenden Ansprüche, die weiter einen Energiespeicher (108) aufweist, der dazu eingerichtet ist, von dem Energieernter (102) bereitgestellte Energie zwischenzuspeichern, wobei
eine Kapazität des Energiespeichers (108) derart ausgelegt ist, dass ein sicherer Betrieb bei Ausfall des Energieerntes, insbesondere bei Ausfall des Energieernters (102), bis zu einem Wiederherstellen der Energieübertragung gewährleistet ist.

6. Löschdüse (100) nach einem der vorstehenden Ansprüche, wobei die Löschdüse (100) eine steuerbare Auslösung mit einem Gehäuse und einem darin angeordneten und durch ein Dichtelement abgedichteten Absperrventil, umfasst, wobei die steuerbare Auslösung vorzugsweise ferner ein temperaturempfindliches, zerstörbares Fühlerelement umfasst, wobei
- das temperaturempfindliche zerstörbare Fühlerelement mit einem thermischen Heizelement gekoppelt ist und
- das Heizelement mit Ausgängen zum Anschluss an den Energiespeicher (108) in Verbindung mit dem Steuerorgan (106) versehen ist.

7. Feuerlöscheinrichtung (1) zur selektiven Erkennung und Löschung von Bränden in mindestens einem Schutzbereich (200), wobei die Feuerlöscheinrichtung (1) je Schutzbereich (200) eine oder mehrere Löschdüsen (100) nach einem der vorstehenden Ansprüche, die vorzugsweise ferner je Schutzbereich (200) einen Energieübertrager (140) aufweist, der zum Übertragen von Energie (142) an die eine oder mehreren Löschdüsen eingerichtet ist, wobei der Energieübertrager (140) besonders bevorzugt in Kommunikationsverbindung mit einer Steuereinheit (300), insbesondere einer Brandmelder- und/oder Löschsteuerzentrale, steht und dazu eingerichtet ist, mit der oder den Löschdüsen (100) zu kommunizieren, wobei die Kommunikation der Löschdüsen (100) mit der Steuereinheit (300) über den Energieübertrager (140) erfolgt.

8. Feuerlöscheinrichtung (1) nach Anspruch 7, wobei der Energieübertrager (140) dazu eingerichtet ist, die Kommunikation zu einem Energieempfänger (102) auf die übertragene Energie (142) aufzuschalten beziehungsweise diese damit zu überlagern.

9. Feuerlöscheinrichtung (1) nach einem der Ansprüche 7 bis 8, wobei die übertragene Energie (142) elektromagnetische Energie in Form eines gerichteten Lichtstrahls, oder eines anderen gerichteten elektromagnetischen Impulses, umfasst.

10. Feuerlöscheinrichtung (1) nach einem der Ansprüche 7 bis 9, die weiter wenigstens eine Fluidleitung zur Bereitstellung von Löschfluid bei der oder den Löschdüsen (100) aufweist, wobei
die Fluidleitung (120) elektrisch isoliert ist, und
der Energieernter (102) dazu eingerichtet ist, mittels eines elektrisch leitfähigen Fluids innerhalb der Fluidleitung (102) übertragene elektrische Energie (142) bereitzustellen.

11. Feuerlöscheinrichtung (1) nach einem der Ansprüche 7 bis 10, wobei die Aktivierung der Löschdüsen (100), im Fall eines Kommunikationsausfalls, automatisch erfolgt.

12. Feuerlöschsystem mit einer Feuerlöscheinrichtung (1) nach einem der Ansprüche 7 bis 11 und einer Brandmelder- und/oder Löschsteuerzentrale.

13. Verfahren zum Betreiben einer Löschdüse (100),nach einem der Ansprüche 1-6, einer Feuerlöscheinrichtung (1) zur selektiven Erkennung und Löschung von Bränden in mindestens einem Schutzbereich (200),
**dadurch gekennzeichnet, dass**
das Verfahren ein Bereitstellen von Energie (142) durch den Energieernter (102) umfasst, wobei das Verfahren optional ein Übertragen von Energie an den Energieernter (102) der Löschdüse (100) mittels eines Energieübertragers (140) umfasst.

14. Verwendung einer Löschdüse nach einem der Ansprüche 1-6 und eines in einem Sprinklerrohr zirkulierenden und/oder elektrisch leitenden Fluids zur Energieübertragung, **dadurch gekennzeichnet, dass** die Verwendung ein Bereitstellen von Energie (142) durch den Energieernter (102) umfasst.

## Claims

1. An extinguishing nozzle (100) of a fire extinguishing installation (1) for selectively identifying and fighting fires in at least one protected area (200), wherein the extinguishing nozzle (100) has:
- a communication unit (104) which is configured for communicating with a control unit (300) of the fire extinguishing installation (1),
- a control element (106) which is configured for controlling the extinguishing nozzle (100), wherein the extinguishing nozzle (100) is connectable to at least one fluid line (120) and the control element (106) is configured for selectively enabling and/or shutting off a passage of an extinguishing fluid, which is flowing in the fluid line (120), through the extinguishing nozzle (100), **characterized in that** the extinguishing nozzle (100) further comprises:
- an energy harvester (102) which is configured for providing energy (142) for at least the communication unit (104) and the control element (106),
wherein the energy harvester (102) is configured to provide energy utilizing a piezoelectric effect, a thermoelectric effect, an electromagnetic effect, a photoelectric effect and/or from flow energy.

2. The extinguishing nozzle (100) as claimed in claim 1, wherein the energy harvester (102) is configured to receive and provide the energy (142) from an energy transmitter (140) which is provided for each protected area (200) and which is configured for transmitting energy (142).

3. The extinguishing nozzle (100) as claimed in any of the preceding claims, wherein the energy harvester (102) is configured to utilize a pressure or a change in the pressure within the fluid line for the purposes of providing energy, and/or
wherein the energy harvester (102) is configured to utilize a temperature or a flow through the fluid line for the purposes of providing energy, and/or
wherein the energy harvester (102) is configured to provide an electrical current, which is conducted by means of a fluid arranged within the fluid line, as energy (142).

4. The extinguishing nozzle (100) as claimed in any of the preceding claims, wherein the energy harvester (102) implements at least two different forms of energy harvesting.

5. The extinguishing nozzle (100) as claimed in any of the preceding claims, which furthermore has an energy store (108) which is configured to buffer-store energy provided by the energy harvester (102), wherein
a capacity of the energy store (108) is configured such that, in the event of failure of the energy harvesting, in particular in the event of failure of the energy harvester (102), reliable operation is ensured until the transmission of energy has been restored.

6. The extinguishing nozzle (100) as claimed in any of the preceding claims, wherein the extinguishing nozzle (100) comprises a controllable triggering arrangement with a housing and with a shut-off valve which is arranged in said housing and which is sealed off by means of a sealing element,
wherein the controllable triggering arrangement preferably furthermore comprises a temperature-sensitive, destructible probe element, wherein
- the temperature-sensitive destructible probe element is coupled to a thermal heating element, and
- the heating element is equipped with outputs for connection to the energy store (108) in conjunction with the control element (106).

7. A fire extinguishing installation (1) for selectively identifying and fighting fires in at least one protected area (200), wherein the fire extinguishing installation (1) has, for each protected area (200), one or more extinguishing nozzles (100) as claimed in any of the preceding claims,
which preferably furthermore has, for each protected area (200), an energy transmitter (140) which is configured for transmitting energy (142) to the one or more extinguishing nozzles,
wherein the energy transmitter (140) particularly preferably has a communication connection to a control unit (300), in particular a fire detector and/or extinguishing control station, and is configured to communicate with the one or more extinguishing nozzles (100), wherein the communication of the extinguishing nozzles (100) with the control unit (300) takes place via the energy transmitter (140).

8. The fire extinguishing installation (1) as claimed in claim 7, wherein the energy transmitter (140) is configured to overlay or superimpose the communication with an energy receiver (102) onto the transmitted energy (142).

9. The fire extinguishing installation (1) as claimed in any of claims 7 to 8, wherein the transmitted energy (142) comprises electromagnetic energy in the form of a targeted light beam or of some other targeted electromagnetic pulse.

10. The fire extinguishing installation (1) as claimed in any of claims 7 to 9, which furthermore has at least one fluid line for providing extinguishing fluid at the one or more extinguishing nozzles (100), wherein
the fluid line (120) is electrically insulated, and
the energy harvester (102) is configured to provide electrical energy (142) transmitted by means of an electrically conductive fluid within the fluid line (102).

11. The fire extinguishing installation (1) as claimed in any of claims 7 to 10, wherein the activation of the extinguishing nozzles (100) takes place automatically in the event of a communication failure.

12. A fire extinguishing system having a fire extinguishing installation (1) as claimed in any of claims 7 to 11 and having a fire detector and/or extinguishing control station.

13. A method for operating an extinguishing nozzle (100) according to one of claims 1 to 6 of a fire extinguishing installation (1) for selectively identifying and fighting fires in at least one protected area (200), **characterized in that**
the method comprises a provision of energy (142) by the energy harvester (102),
wherein the method optionally comprises a transmission of energy to the energy harvester (102) of the extinguishing nozzle (100) by means of an energy transmitter (140).

14. The use of an extinguishing nozzle (100) according to one of claims 1 to 6 and of a fluid circulating and/or electrically conducting in a sprinkler conduit for the purposes of transmitting energy, **characterized in that** the use comprises provision of energy (142) by the energy harvester (102).

## Revendications

1. Buse d'extinction (100) d'un dispositif d'extinction d'incendie (1) pour la détection et la lutte sélectives contre des incendies dans au moins une zone de protection (200), dans laquelle la buse d'extinction (100) présente :
- une unité de communication (104) qui est conçue pour communiquer avec une unité de commande (300) du dispositif d'extinction d'incendie (1),
- un organe de commande (106), qui est conçu pour commander la buse d'extinction (100), dans laquelle la buse d'extinction (100) peut être reliée à au moins une conduite de fluide (120) et l'organe de commande (106) est conçu pour libérer et/ou bloquer sélectivement un passage d'un fluide d'extinction circulant dans la conduite de fluide (120) à travers la buse d'extinction (100), **caractérisée en ce que** la buse d'extinction (100) présente en outre :
- un collecteur d'énergie (102) qui est conçu pour fournir de l'énergie (142) à au moins l'unité de communication (104) et l'organe de commande (106), dans laquelle le collecteur d'énergie (102) est conçu pour fournir de l'énergie en utilisant un effet piézoélectrique, un effet thermoélectrique, un effet électromagnétique, un effet photoélectrique et/ou de l'énergie cinétique.

2. Buse d'extinction (100) selon la revendication 1, dans laquelle le collecteur d'énergie (102) est conçu pour recevoir et pour fournir l'énergie (142) d'un transmetteur d'énergie (140) fourni pour chaque zone de protection (200), qui est conçu pour transmettre de l'énergie (142).

3. Buse d'extinction (100) selon l'une quelconque des revendications précédentes, dans laquelle le collecteur d'énergie (102) est conçu pour exploiter une pression ou une variation de pression à l'intérieur de la conduite de fluide pour fournir de l'énergie, et/ou dans laquelle le collecteur d'énergie (102) est conçu pour exploiter une température ou un passage à travers la conduite de fluide pour fournir de l'énergie, et/ou dans laquelle le collecteur d'énergie (102) est conçu pour fournir un courant électrique, qui est acheminé au moyen d'un fluide disposé à l'intérieur de la conduite de fluide sous forme d'énergie (142).

4. Buse d'extinction (100) selon l'une quelconque des revendications précédentes, dans laquelle le collecteur d'énergie (102) met en œuvre au moins deux formes différentes de collecte d'énergie.

5. Buse d'extinction (100) selon l'une quelconque des revendications précédentes, qui présente en outre un accumulateur d'énergie (108) qui est conçu pour stocker temporairement l'énergie fournie par le collecteur d'énergie (102), dans laquelle une capacité de l'accumulateur d'énergie (108) est dimensionnée de sorte qu'un fonctionnement sûr en cas de défaillance de la collecte d'énergie, notamment en cas de défaillance du collecteur d'énergie (102), soit garanti jusqu'au rétablissement de la transmission d'énergie.

6. Buse d'extinction (100) selon l'une quelconque des revendications précédentes, dans laquelle la buse d'extinction (100) comprend un déclenchement pouvant être commandé avec un boîtier et une vanne d'arrêt disposée à l'intérieur et étanchéifiée par un élément d'étanchéité, dans laquelle le déclenchement pouvant être commandé comprend de préférence en outre un élément sensible à la température, destructible, dans laquelle
- l'élément sensible à la température destructible est couplé à un élément chauffant thermique et
- l'élément chauffant est pourvu de sorties pour le raccordement à l'accumulateur d'énergie (108) en liaison avec l'organe de commande (106).

7. Dispositif d'extinction d'incendie (1) pour la détection et l'extinction sélectives d'incendies dans au moins une zone de protection (200), dans lequel le dispositif d'extinction d'incendie (1) comprend ,pour chaque zone de protection (200), une ou plusieurs buses d'extinction (100) selon l'une quelconque des revendications précédentes, qui présente de préférence en outre, pour chaque zone de protection (200), un transmetteur d'énergie (140) qui est conçu pour transmettre de l'énergie (142) aux une ou plusieurs buses d'extinction, dans lequel le transmetteur d'énergie (140) est de manière particulièrement préférée en liaison de communication avec une unité de commande (300), en particulier une centrale de détection d'incendie et/ou de commande d'extinction, et est conçu pour communiquer avec la ou les buses d'extinction (100), dans lequel la communication des buses d'extinction (100) avec l'unité de commande (300) s'effectue par l'intermédiaire du transmetteur d'énergie (140).

8. Dispositif d'extinction d'incendie (1) selon la revendication 7, dans lequel le transmetteur d'énergie (140) est conçu pour activer la communication vers un récepteur d'énergie (102) sur l'énergie (142) transmise ou la superposer à celle-ci.

9. Dispositif d'extinction d'incendie (1) selon l'une quelconque des revendications 7 à 8, dans lequel l'énergie (142) transmise comprend une énergie électromagnétique sous la forme d'un faisceau lumineux orienté ou d'une autre impulsion électromagnétique orientée.

10. Dispositif d'extinction d'incendie (1) selon l'une quelconque des revendications 7 à 9, qui comprend en outre au moins une conduite de fluide pour la fourniture de fluide d'extinction pour la ou les buses d'extinction (100), dans lequel
la conduite de fluide (120) est isolée électriquement, et
le collecteur d'énergie (102) est conçu pour fournir de l'énergie électrique (142) transmise au moyen d'un fluide électriquement conducteur à l'intérieur de la conduite de fluide (102).

11. Dispositif d'extinction d'incendie (1) selon l'une quelconque des revendications 7 à 10, dans lequel l'activation des buses d'extinction (100), en cas de panne de communication, s'effectue automatiquement.

12. Système d'extinction d'incendie avec un dispositif d'extinction d'incendie (1) selon l'une quelconque des revendications 7 à 11 et une centrale de détection d'incendie et/ou de commande d'extinction.

13. Procédé pour faire fonctionner une buse d'extinction (100), selon l'une quelconque des revendications 1 à 6, d'un dispositif d'extinction d'incendie (1) pour la détection et l'extinction sélectives d'incendies dans au moins une zone de protection (200), **caractérisé en ce que** le procédé comprend une fourniture d'énergie (142) par le collecteur d'énergie (102), dans lequel le procédé comprend facultativement une transmission au collecteur d'énergie (102) de la buse d'extinction (100) au moyen d'un transmetteur d'énergie (140).

14. Utilisation d'une buse d'extinction selon l'une quelconque des revendications 1 à 6 et d'un fluide circulant et/ou électriquement conducteur dans un tuyau de gicleur d'incendie pour la transmission d'énergie, **caractérisée en ce que** l'utilisation comprend une fourniture d'énergie (142) par le collecteur d'énergie (102).
